# EUROPÄISCHE PATENTSCHRIFT

(11) **EP 1 849 976 B1**
(45) Veröffentlichungstag und Bekanntmachung des Hinweises auf die Patenterteilung: **27.07.2011**
(21) Anmeldenummer: 07106467.9
(22) Anmeldetag: 19.04.2007
(51) Int. Cl.: F02D 13/02

(54) **Kolbenmotor**
Piston engine
Moteur à pistons

(30) Priorität: 27.04.2006 DE 102006020258
(43) Veröffentlichungstag der Anmeldung: 31.10.2007
(73) Patentinhaber: Mahle International GmbH, 70376 Stuttgart (DE)
(72) Erfinder: Elsässer, Alfred, Dr., 75210, Keltern (DE); Otto, Rainer, 99094, Erfurt (DE)
(74) Vertreter: BRP Renaud & Partner

(56) Entgegenhaltungen:
- DE-A1- 3 212 910
- DE-A1- 3 434 476
- DE-A1- 3 514 327
- GB-A- 2 087 975

## Beschreibung

Die vorliegende Erfindung betrifft einen Kolbenmotor, insbesondere in einem Kraftfahrzeug.

Üblicherweise weist ein Kolbenmotor mehrere Zylinder auf, deren Brennräume eingangsseitig an eine Frischgasanlage und ausgangsseitig an eine Abgasanlage angeschlossen sind. Dabei umfasst die Frischgasanlage für jeden Zylinder üblicherweise jeweils einen separaten Gaspfad, über den dem jeweiligen Brennraum Frischgas zuführbar ist. Die Frischgasanlage ist dabei so dimensioniert, dass den Zylindern ein bei Volllast des Kolbenmotors benötigter Frischgasstrom zuführbar ist. Bei Teillast muss die den Brennräumen zugeführte Frischgasmenge reduziert werden. Hierzu ist es üblich, die Frischgasanlage zu drosseln, d.h. mit einer einstellbaren Drosseleinrichtung, insbesondere Drosselklappe, zu versehen, mit welcher der in den einzelnen Gaspfaden zugeführte Frischgasstrom bedarfsabhängig drosselbar ist. Nachteilig ist bei gedrosselten Frischgasanlagen, dass die jeweils verwendete Drosseleinrichtung auch bei Volllast einen Strömungswiderstand bildet und bei Teillast nur relativ kleine Strömungsgeschwindigkeiten ermöglicht. Bei kleinen Strömungsgeschwindigkeiten im Frischgasstrom lassen sich strömungsdynamische Effekte bei der Beladung der Brennräume nicht oder nur unzureichend ausnutzen. Derartige strömungsdynamische Effekte, wie z.B. Drallströmung und Tumbleströmung, lassen sich bei modernen Kolbenmotoren zur Verbesserung des Verbrennungsprozesses nutzen, um den Kraftstoffverbrauch und die Schadstoffemissionen zu reduzieren. Da Kolbenmotoren weitgehend bei Teillast und nur vergleichsweise selten bei Volllast betrieben werden, besteht im Teillastbereich das größte Potential zur Reduzierung des Kraftstoffverbrauchs und der Schadstoffemissionen. Es besteht daher der Wunsch, auch im Teillastbetrieb strömungsdynamische Effekte zur Reduzierung des Kraftstoffverbrauchs und der Schadstoffemissionen auszunutzen.

Aus Pischinger "variable Ventilsteuerung II" Expertverlag, Seiten 244 bis 260, ist es bekannt, bei einem Kolbenmotor die Frischgasanlage stromauf von Einlassventilen zu entdrosseln bzw. drosselfrei auszugestalten, d.h., die Frischgasanlage enthält keine spezielle Drosseleinrichtung zur Drosselung des Frischgasstroms. Zur Realisierung der vom jeweiligen Lastzustand des Kolbenmotors abhängigen Frischgasbeladung ist eine variable Ventilsteuerung bekannt, die es ermöglicht, die Öffnungs- und Schließzeiten der Einlassventile auf geeignete Weise zu adaptieren. Die variable Ventilsteuerung kann während des Einlasshubs des jeweiligen Kolbens auch zwei Beladungsphasen zeitlich voneinander beabstandet realisieren. Ebenso ist es möglich, den Öffnungshub der Einlassventile zu variieren. Um diese vielfältigen Variationsmöglichkeiten zu realisieren, arbeitet der bekannte Kolbenmotor mit einer elektromagnetischen Ventilsteuerung, die es erlaubt, die Einlassventile willkürlich zu öffnen und zu schließen sowie deren Öffnungshub willkürlich zu verändern. Derartige elektromagnetische Ventilsteuerungen sind jedoch erheblich teurer als herkömmliche durch Nockenwellen gesteuerte Ventiltriebe.

Die vorliegende Erfindung beschäftigt sich mit dem Problem, für einen Kolbenmotor der eingangs genannten Art eine verbesserte Ausführungsform anzugeben, die sich insbesondere im Teillastbetrieb durch einen verbesserten Verbrennungsprozess auszeichnet.

Eine derartige Lehre ergibt sich aus der Veröffentlichen DE 34 34 476 A1.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Frischgasanlage so auszugestalten, dass sie für wenigstens einen Zylinder, vorzugsweise jedoch für jeden Zylinder, jeweils zwei Gaspfade aufweist, nämlich einen Volllastpfad und einen Teillastpfad. Desweiteren ist der Kolbenmotor erfindungsgemäß mit einer einlassseitigen Ventilanordnung sowie mit einer zugehörigen Steuereinrichtung ausgestattet, wobei die Steuereinrichtung durch eine entsprechende Ansteuerung der Ventilanordnung bei Teillast den Volllastpfad permanent sperrt und den Teillastpfad zum Steuern des benötigten Frischgasstroms betreibt. Durch diese Bauweise ist im Teillastbetrieb nur der jeweilige Teillastpfad aktiv, während der jeweilige Volllastpfad deaktiviert ist. Bei entsprechendem durchströmbaren Querschnitt des Teillastpfads lassen sich somit auch im Teillastbetrieb relativ hohe Strömungsgeschwindigkeiten erzielen. Hierdurch können strömungsdynamische Effekte zur Verbesserung des Verbrennungsprozesses genutzt werden. Für den Vollastbetrieb steht dann der Vollastpfad zur Verfügung. Je nach Konzeption kann für den Vollastbetrieb der Vollastpfad einfach zugeschaltet werden, so dass die benötigte Frischgasmenge durch beide Gaspfade zugeführt wird. Ebenso ist es möglich, im Vollastbetrieb die Frischgasversorgung ausschließlich über den Vollastpfad zu realisieren. Zumindest im letzten Fall besitzt der Vollastpfad einen größeren durchströmbaren Querschnitt als der Teillastpfad.

Die einlassseitige Ventilanordnung lässt sich auf vielfältige Weise realisieren. Denkbar ist beispielsweise eine Ausführungsform mit willkürlich steuerbaren Einlassventilen für beide Gaspfade. Alternativ ist es möglich, nur dem Vollastpfad ein willkürlich steuerbares Einlassventil zuzuordnen, während dem Teillastpfad ein preiswertes, z.B. nockenwellengesteuertes Einlassventil sowie stromauf davon ein willkürlich steuerbares Zusatzventil zugeordnet sind. Desweiteren ist eine Ausführungsform möglich, bei welcher beiden Gaspfaden jeweils ein herkömmliches, z.B. mit Nockenwellen gesteuertes Einlassventil und stromauf davon jeweils ein willkürlich steuerbares Zusatzventil angesteuert sind. Dabei ist von besonderer Bedeutung, dass die Zusatzventile besonders einfach und vergleichsweise preiswert ausgestaltet werden können, da sie grundsätzlich nur zwischen einer Offenstellung und einer Schließstellung verstellbar sein müssen, da Zwischenstellungen nicht erforderlich sind.

Besonders vorteilhaft ist nun eine Weiterbildung, bei welcher die Frischgasanlage ungedrosselt bzw. drosselfrei ausgestaltet ist. Die entdrosselte Frischgasanlage verbessert zumindest im Teillastbereich den Verbrennungsprozess hinsichtlich Kraftstoffverbrauch und Schadstoffemissionen. Die Regulierung der benötigten Frischgasmenge erfolgt bei Teillast über eine entsprechende Steuerung des Teillastpfads, d.h. durch die Betätigung des dem Teillastpfad zugeordneten Einlassventils und/oder Zusatzventils. Bei Volllast ist in der Regel keine aktive Regulierung der Frischgasmenge erforderlich, da dann die Ventilanordnung zum Zuführen der maximal möglichen Frischgasmenge angesteuert bzw. eingestellt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

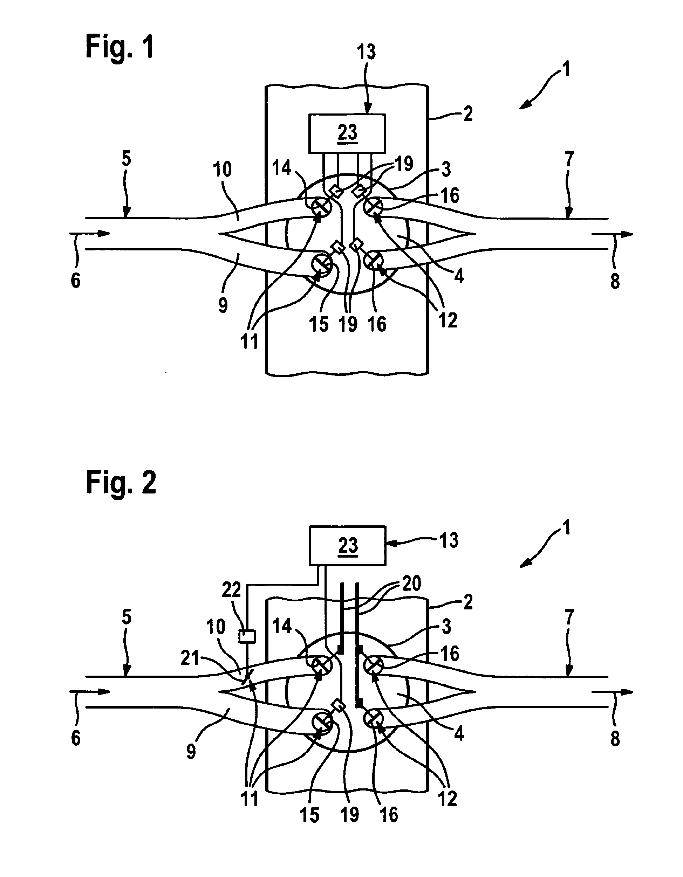

- Fig. 1 bis 4: jeweils eine stark vereinfachte, schaltplanartige Prinzipskizze eines Teilbereichs eines Kolbenmotors, bei unterschiedlichen Ausführungsformen.

Entsprechend den Fig. 1 bis 4 umfasst ein nur teilweise dargestellter Kolbenmotor 1, der insbesondere in einem Kraftfahrzeug angeordnet sein kann, in einem Motorblock 2 mehrere Zylinder 3, von denen hier jedoch jeweils nur einer dargestellt ist. Jeder Zylinder 3 umschließt einen Brennraum 4, in welchem der eigentliche Verbrennungsprozess stattfindet. Desweiteren ist in jedem Zylinder 3 ein nicht gezeigter Kolben hubverstellbar gelagert, der durch seinen Hub in bekannter Weise das Brennraumvolumen variiert. Die Brennräume 4 sind an eine Frischgasanlage 5 des Kolbenmotors 1 angeschlossen, die im Betrieb des Kolbenmotors 1 den einzelnen Brennräumen 4 entsprechend einem Pfeil 6 Frischgas zuführt. Desweiteren ist an die Brennräume 4 jeweils eine Abgasanlage 7 des Kolbenmotors 1 angeschlossen, die im Betrieb des Kolbenmotors 1 Verbrennungsabgase entsprechend einem Pfeil 8 abführt.

Zumindest für den hier gezeigten Zylinder 3, vorzugsweise jedoch für sämtliche Zylinder 3 des Kolbenmotors 1 weist die Frischgasanlage 5 zwei separate Gaspfade auf, nämlich einen Volllastpfad 9 und einen Teillastpfad 10. Über diese beiden Gaspfade 9, 10 ist dem jeweiligen Brennraum 4 das Frischgas 6 zuführbar. Bei den hier gezeigten Ausführungsformen ist jeweils der Vollastpfad 9 mit einem größeren durchströmbaren Querschnitt versehen als der Teillastpfad 10. Grundsätzlich ist jedoch auch eine Ausführungsform mit gleich großen Strömungsquerschnitten möglich.

Der Kolbenmotor 1 ist zum Steuern des Ladungswechsels bei den jeweiligen Zylindern 3 mit einer einlassseitigen Ventilanordnung 11 sowie mit einer auslassseitigen Ventilanordnung 12 ausgestattet. Während die einlassseitige Ventilanordnung 11 den durch die Gaspfade 9, 10 in den jeweiligen Brennraum 4 geführten Frischgasstrom steuert, steuert die auslassseitige Ventilanordnung 12 den aus dem jeweiligen Brennraum 4 herausgeführten Abgasstrom. Desweiteren ist eine Steuereinrichtung 13 vorgesehen, die z.B. ein Steuergerät 23 aufweist, mit dem zumindest die einlassseitige Ventilanordnung 11 betätigbar ist.

Diese Steuereinrichtung 13 bzw. das Steuergerät 23 ist so ausgestaltet, dass bei Teillast des Kolbenmotors 1 die einlassseitige Ventilanordnung 11 so angesteuert wird, dass der Vollastpfad 9 permanent gesperrt ist, während die einlassseitige Ventilanordnung 11 im Hinblick auf den Teillastpfad 10 so angesteuert wird, dass der Teillastpfad 10 zum Steuern des benötigten Frischgasstroms betätigt bzw. betrieben wird. Im Unterschied dazu ist die Steuereinrichtung 13 bzw. das Steuergerät 23 für den Volllastbetrieb des Kolbenmotors 1 so ausgestaltet, dass durch entsprechende Ansteuerung der einlassseitigen Ventilanordnung 11 zumindest den Volllastpfad 9 zum Steuern des Frischgasstroms betätigt wird, insbesondere so, dass der Volllastpfad 9 zumindest während eines Einlasshubs des jeweiligen Kolbens permanent maximal geöffnet ist. Grundsätzlich kann die Steuereinrichtung 13 über das Steuergerät 23 beim Volllastbetrieb auch den Teillastpfad 10 zum Steuern eines Frischgasteilstroms betätigen, und zwar insbesondere so, dass auch der Teillastpfad 10 bei Volllast permanent maximal geöffnet ist zumindest während eines Einlasshubs des jeweiligen Kolbens. Grundsätzlich kann jedoch der Teillastpfad 10 bei Volllast gesperrt sein.

Bei den in den Fig. 1 bis 3 gezeigten Ausführungsformen weist die einlassseitige Ventilanordnung 11 ein ausschließlich dem Teillastpfad 10 zugeordnetes Teillast-Einlassventil 14 sowie ein ausschließlich dem Volllastpfad 9 zugeordnetes Volllast-Einlassventil 15 auf. Analog dazu weist auch die auslassseitige Ventilanordnung 12 zwei Auslassventile 16 auf, die vorzugsweise stets synchron betätigt werden.

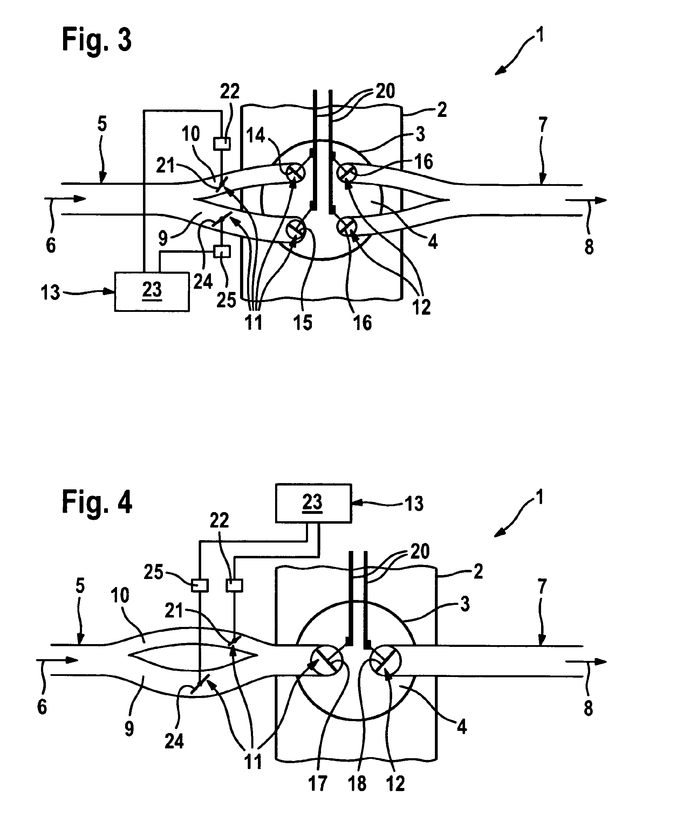

Im Unterschied dazu zeigt Fig. 4 eine Ausführungsform, bei der einlassseitig und auslassseitig die Ventilanordnungen 11, 12 jeweils nur ein Ventil aufweisen, nämlich ein Einlassventil 17 und ein Auslassventil 18.

Bei der in Fig. 1 gezeigten Ausführungsform sind die beiden Einlassventile 14, 15 unabhängig voneinander sowie willkürlich ansteuerbar bzw. zum Öffnen und Schließen betätigbar. Auch die Auslassventile 16 sind hier exemplarisch willkürlich betätigbar. Entsprechende Aktuatoren sind mit 19 bezeichnet und auf geeignete Weise mit dem Steuergerät 23 verbunden. Beispielsweise handelt es sich bei den Aktuatoren 19 um elektromagnetische Stellantriebe.

Das Steuergerät 23 ist nun so ausgestaltet, dass es bei Teillast das Volllast-Einlassventil 15 permanent sperrt, während es das Teillast-Einlassventil 14 zum Steuern des erforderlichen Frischgasstroms betätigt. Dabei kann der jeweilige Frischgasstrom durch Auswählen des Öffnungszeitpunkts und des Schließzeitpunkts für das Teillast-Einlassventil 14 gesteuert werden. Ebenso lässt sich die zugeführte Frischgasmenge durch Variieren des Öffnungshubs des Teillast-Einlassventils 14 einstellen. Desweiteren kann es zur Realisierung bestimmter erwünschter dynamischer Strömungseffekte erforderlich sein, während der Beladung des Brennraums 4 zwei oder mehr Beladungsphasen durch mehrfaches Öffnen und Schließen des Teillast-Einlassventils 14 zu realisieren.

Um bei Volllast die gewünschte Beladung des Brennraums 4 zu realisieren, ist die Steuereinrichtung 13 so ausgestaltet, dass sie über das Steuergerät 23 den erforderlichen Frischgasstrom durch entsprechende Betätigung des Volllast-Einlassventils 15 steuert. Da bei Volllast üblicherweise die maximal verfügbare Frischgasmenge zugeführt werden soll, reduziert sich die Steuerung des Frischgasstroms vorzugsweise im wesentlichen darauf, dass das Volllast-Einlassventil 15 während des Einlasshubs des Kolbens permanent maximal geöffnet ist. Für den Volllastbetrieb kann zusätzlich auch das Teillast-Einlassventil 14, insbesondere während des Einlasshubs permanent und maximal, geöffnet sein. Bei einer entsprechenden Auslegung des Volllastpfads 9 ist dies jedoch nicht unbedingt erforderlich.

Während die Einlassventile 14, 15 unabhängig voneinander willkürlich ansteuerbar sind, werden die Auslassventile 16 zweckmäßig synchron betätigt. Dabei ist eine willkürliche Betätigung der Auslassventile 16 nicht unbedingt erforderlich. Dementsprechend zeigen die Fig. 2 bis 4 Ausführungsformen, bei denen die Auslassventile 16 zwangsgesteuert, z.B. mittels Nockenwellen 20 betätigbar sind. Mit Nockenwellen 20 angesteuerte Auslassventile 16, 18 lassen sich erheblich preiswerter realisieren.

Bei der in Fig. 2 gezeigten Ausführungsform enthält der Teillastpfad 10 stromauf des Teillast-Einlassventils 14 ein Teillast-Zusatzventil 21, das zumindest zwischen einer Offenstellung und einer Schließstellung verstellbar ist. Das Teillast-Zusatzventil 21 ist mit einem entsprechenden Aktuator 22 gekoppelt, der mit dem Steuergerät 23 verbunden ist. Der Aktuator 22 kann z.B. eine Hochgeschwindigkeitsstelleinrichtung sein, die es beispielsweise ermöglicht, das Teillast-Zusatzventil 21 in weniger als 5ms zwischen beiden Endstellungen umzuschalten. Das Teillast-Zusatzventil 21 ist willkürlich betätigbar. Im Unterschied dazu ist bei dieser Ausführungsform das Teillast-Einlassventil 14 z.B. mittels einer Nockenwelle 20 zwangsgesteuert. Ein derartiger Ventiltrieb ist gegenüber dem elektromagnetischen Aktuator 19 aus Fig. 1 erheblicher preiswerter realisierbar. Bei der Ausführungsform gemäß Fig. 2 ist das Volllast-Einlassventil 15 nach wie vor willkürlich betätigbar, insbesondere mittels eines elektromagnetischen Aktuators 19.

Dabei kann das Teillast-Zusatzventil 21 vergleichsweise preiswert aufgebaut werden, da es vorzugsweise nur zwischen einer Sperrstellung und einer Offenstellung verstellbar sein muss. Zwischenstellungen bzw. Drosselstellungen sind nicht erforderlich.

Die Steuereinrichtung 13 ist bei dieser Ausführungsform so ausgestaltet, dass sie bei Teillast das Teillast-Einlassventil 14 zu Beginn eines Einlasshubs des dem jeweiligen Zylinder 3 zugeordneten Kolbens öffnet und zum Ende dieses Einlasshubs schließt bzw. sperrt. Erreicht wird dies mittels der Nockenwelle 20, also mittels einer Zwangssteuerung, die mit der Kolbenbewegung gekoppelt ist. Über das Steuergerät 23 betätigt die Steuereinrichtung 13 den Aktuator 19 des Volllast-Einlassventils 15 zum permanenten Sperren des Volllastpfads 9. Der Frischgasstrom kann dann von der Steuereinrichtung 13 über das Steuergerät 23 durch entsprechende Betätigungen des Aktuators 22, also durch Betätigen des Teillast-Zusatzventils 21 realisiert werden. Durch gezielt einstellbare Öffnungszeitpunkte und Schließzeitpunkte des Teillast-Zusatzventils 21 lassen sich gewünschte strömungsdynamische Effekte realisieren, insbesondere durch mehrphasige Beladungsvorgänge. Bei Volllast betätigt die Steuereinrichtung 13 über ihr Steuergerät 23 das Volllast-Einlassventil 15 zum Öffnen des Volllastpfads 9 während des jeweiligen Einlasshubs.

Bei der in Fig. 3 gezeigten Ausführungsform ist auch im Volllastpfad 9 stromauf des Volllast-Einlassventils 15 ein zusätzliches Ventil, nämlich ein Volllast-Zusatzventil 24 angeordnet, das über einen entsprechenden Aktuator 25 betätigbar ist. Das Volllast-Einlassventil 15 kann dann preiswert durch eine Zwangssteuerung betätigt werden, z.B. ebenfalls mittels einer Nockenwelle 20.

Die Nockenwellen 20 und die Aktuatoren 19, 22, 25 bilden dabei Bestandteile der Steuereinrichtung 13, ebenso wie das mit den Aktuatoren 19, 22, 25 verbundene Steuergerät 23.

Bei der in Fig. 3 gezeigten Ausführungsform ist die Steuereinrichtung 13 so ausgebildet, dass sie bei Teillast und Volllast über die jeweilige Zwangssteuerung (z.B. die Nockenwelle 20) die beiden Einlassventile 14, 15 zu Beginn des Einlasshubs des zugehörigen Kolbens öffnet und zum Ende des Einlasshubs sperrt. Bei Teillast wird das Volllast-Zusatzventil 24 vom Steuergerät 23 permanent zum Sperren angesteuert. Die Einstellung des Frischgasstroms erfolgt dann über entsprechende Betätigungen des Teillast-Zusatzventils 21. Für den Vollastbetrieb betätigt das Steuergerät 23 das Volllast-Zusatzventil 24 zum Öffnen, wobei es insbesondere permanent und maximal geöffnet sein kann. Bei Volllast kann grundsätzlich auch das Teillast-Zusatzventil 21, insbesondere permanent und vollständig, geöffnet sein.

Die in Fig. 4 gezeigte Ausführungsform unterscheidet sich von der in Fig. 3 gezeigten Ausführungsform lediglich dadurch, dass bei den Gaspfaden 9, 10 ein gemeinsames Einlassventil 17 zugeordnet ist. Die Betätigung der Zusatzventile 21, 24 erfolgt dabei für Teillast und Volllast analog zu der in Fig. 3 gezeigten Ausführungsform.

Die Frischgasanlage 5 ist vorzugsweise drosselfrei ausgestaltet. D.h., dass die Frischgasanlage 5 stromauf der Einlassventile 14, 15, 17 bzw. stromauf der Zusatzventile 21, 24 keine Drosseleinrichtung zum Drosseln des Frischgasstroms enthält. Mit anderen Worten, die Frischgasanlage 5 ist entdrosselt ausgestaltet.

Im Teillastbetrieb erfolgt die Steuerung des Frischgasstroms bei den Ausführungsformen der Fig. 2 bis 4 vorzugsweise dadurch, dass das Teillast-Zusatzventil 21 ausschließlich zwischen seiner Sperrstellung und seiner Offenstellung verstellt wird. Hierdurch werden während des Einlasshubs des zugehörigen Kolbens eine oder mehrere Beladungsphasen realisiert, wodurch sich dynamische Strömungseffekte zur Verbesserung des Verbrennungsprozesses nutzen lassen. Bei Volllast ist das Teillast-Zusatzventil 21 zweckmäßig permanent geöffnet, so dass ein Teil des dem jeweiligen Brennraum 4 zugeführten Frischgases 6 über den Teillastpfad 10 in den jeweiligen Brennraum 4 gelangt. Desweiteren kann bei den Ausführungsformen der Fig. 3 und 4 bei Volllast das Volllast-Zusatzventil 24 und insbesondere auch das Teillast-Zusatzventil 21 permanent geöffnet sein, so dass der Frischgasstrom ausschließlich durch das Öffnen und Sperren des Einlassventils 17 bzw. der Einlassventile 14, 15 gesteuert wird.

Im Vergleich zum Teillast-Zusatzventil 21 kann das Vollast-Zusatzventil 24 grundsätzlich vergleichsweise langsam ausgebildet sein, insbesondere können die Schaltzeiten des Vollast-Zusatzventils 24 größer sein als die Schaltzeiten der Einlassventile 14, 15, 17. Im Unterschied dazu können die Schaltzeiten des Teillast-Zusatzventils 21 kleiner sein als die Schaltzeiten der Einlassventile 14, 15, 17.

Bei einer besonders vorteilhaften Ausführungsform kann die Steuereinrichtung 13 über ihr Steuergerät 23 und den zugehörigen Aktuator 22 das Teillast-Zusatzventil 21 im Teillastbetrieb so ansteuern, dass während des Einlasshubs 3 zeitlich voneinander beabstandete Einströmphasen oder Beladungsphasen für den jeweiligen Brennraum 4 realisiert werden können. Denkbar sind beispielsweise eine Anfangsbeladungsphase, die das Öffnen des jeweiligen Einlassventils 14, 15, 17 umfasst, eine Endbeladungsphase, die das Schließen des jeweiligen Einlassventils 14,1 5, 17 umfasst, sowie eine mittlere Beladungsphase, die zwischen den beiden anderen Beladungsphasen liegt.

Bei einer anderen Ausführungsform kann auch das Volllast-Zusatzventil 24 mit einem Hochgeschwindigkeitsstellantrieb als Aktuator 25 ausgestattet sein, um extrem kurze Schaltzeiten zu realisieren. Bei einer derartigen Ausführungsform kann die Steuereinrichtung 13 über ihr Steuergerät 23 bei Volllast das Volllast-Zusatzventil 24 zur Realisierung einer Impulsaufladung des jeweiligen Brennraums 4 ansteuern.

## Patentansprüche

1. Kolbenmotor, insbesondere in einem Kraftfahrzeug,
- mit mehreren Zylindern (3), deren Brennräume (4) an eine Frischgasanlage (5) angeschlossen sind,
- wobei die Frischgasanlage (5) für wenigstens einen der Zylinder (3) zwei Gaspfade, nämlich einen Volllastpfad (9) und einen Teillastpfad (10), aufweist, über die dem jeweiligen Brennraum (4) Frischgas (6) zuführbar ist,
- wobei eine einlassseitige Ventilanordnung (11) zum Steuern des Frischgasstroms durch die Gaspfade (9, 10) in den jeweiligen Brennraum (4) vorgesehen ist,
- wobei zur Betätigung der Ventilanordnung (11) eine Steuereinrichtung (13) vorgesehen ist, die so ausgestaltet ist, dass sie bei Teillast durch entsprechende Ansteuerung der Ventilanordnung (11) den Volllastpfad (9) permanent sperrt und den Frischgasstrom durch den Teillastpfad (10) steuert und dass sie bei Volllast durch entsprechende Ansteuerung der Ventilanordnung (11) den Frischgasstrom zumindest durch den Volllastpfad (9) steuert,
**dadurch gekennzeichnet,**
- **dass** die Ventilanordnung (11) für den jeweiligen Zylinder (3) zwei Einlassventile aufweist, nämlich ein nur dem Teillastpfad (10) zugeordnetes Teillast-Einlassventil (14) und ein nur dem Volllastpfad (9) zugeordnetes Volllast-Einlassventil (15),
- **dass** die Steuereinrichtung (13) so ausgestaltet ist, dass sie bei Teillast das Volllast-Einlassventil (15) zum permanenten Sperren des Volllastpfads (9) betätigt und das Teillast-Einlassventil (14) zum Steuern des Frischgasstroms durch den Teillastpfad (10) betätigt und dass sie bei Volllast zumindest das Volllast-Einlassventil (15) zum Steuern des Frischgasstroms durch den Volllastpfad (9) betätigt.

2. Kolbenmotor nach Anspruch 1,
**dadurch gekennzeichnet,**
**dass** der Volllastpfad (9) einen größeren durchströmbaren Querschnitt aufweist als der Teillastpfad (10).

3. Kolbenmotor nach Anspruch 1 oder 2,
**dadurch gekennzeichnet,**
**dass** die Frischgasanlage (5) drosselfrei ausgestaltet ist.

4. Kolbenmotor nach einem der Ansprüche 1 bis 3,
**dadurch gekennzeichnet,**
**dass** die Steuereinrichtung (13) so ausgestaltet ist, dass sie zum Steuern des Frischgasstroms durch den jeweiligen Gaspfad (9, 10) das jeweilige Zusatzventil (21, 24) ausschließlich zum Schalten zwischen einer Sperrstellung und einer Offenstellung ansteuert.

5. Kolbenmotor nach einem der Ansprüche bis 4,
**dadurch gekennzeichnet,**
**dass** die Steuereinrichtung (13) so ausgestaltet ist, dass sie bei Volllast die Ventilanordnung (11) so ansteuert, dass ein Teil des dem jeweiligen Brennraum (4) zugeführten Frischgases (6) über den Teillastpfad (10) zugeführt wird.

6. Kolbenmotor nach einem der Ansprüche 1 bis 5,
**dadurch gekennzeichnet,**
**dass** die Steuereinrichtung (13) so ausgestaltet ist, dass sie bei Volllast zumindest das Volllast-Zusatzventil (24) zum permanenten Öffnen des Volllastpfads (9) betätigt und den Frischgasstrom durch wenigstens einen der Gaspfade (9, 10) durch das Öffnen und Sperren des oder der Einlassventile (14, 15, 17) steuert.

7. Kolbenmotor nach einem der Ansprüche 1 bis 6,
**dadurch gekennzeichnet,**
**dass** das Teillast-Zusatzventil (21) so ausgestaltet ist, dass damit kürzere Schaltzeiten als mit dem Volllast-Zusatzventil (24) realisierbar sind.

8. Kolbenmotor nach einem der Ansprüche 1 bis 7,
**dadurch gekennzeichnet,**
**dass** das Teillast-Zusatzventil (21) so ausgestaltet ist, dass damit kürzere Schaltzeiten als mit dem oder den Einlassventilen (14, 15, 17) realisierbar sind.

9. Kolbenmotor nach einem der Ansprüche 1 bis 8,
**dadurch gekennzeichnet,**
**dass** die Steuereinrichtung (13) so ausgestaltet ist, dass sie bei Teillast durch Betätigen des Teillast-Zusatzventils (21) bei geöffnetem Teillast-Einlassventil (14) drei zeitlich voneinander beabstandete Einströmphasen für den Frischgasstrom realisiert.

10. Kolbenmotor nach einem der Ansprüche 1 bis 9,
**dadurch gekennzeichnet,**
**dass** die Steuereinrichtung (13) so ausgestaltet ist, dass sie bei Volllast das Volllast-Zusatzventil (24) und das Volllast-Einlassventil (15) zur Realisierung einer Impulsaufladung ansteuert.

11. Kolbenmotor nach einem der Ansprüche 1 bis 10,
**dadurch gekennzeichnet,**
**dass** die Steuereinrichtung (13) das wenigstens eine gemeinsame Einlassventil (17) mittels einer Nockenwelle (20) ansteuert.

12. Kolbenmotor nach einem der Ansprüche 1 bis 10,
**dadurch gekennzeichnet,**
**dass** die Steuereinrichtung (13) das Teillast-Einlassventil (14) mittels einer Nockenwelle (20) ansteuert.

13. Kolbenmotor nach einem der Ansprüche 1 bis 10,
**dadurch gekennzeichnet,**
**dass** die Steuereinrichtung (13) das Teillast-Einlassventil (14) und das Volllast-Einlassventil (15) mittels wenigstens einer Nockenwelle (20) ansteuert.

## Claims

1. A piston engine, in particular in a motor vehicle,
- having several cylinders (3) whose combustion chambers (4) are connected to a fresh gas system (5),
- wherein the fresh gas system (5) has two gas paths, namely a full-load path (9) and a partial-load path (10) for at least one of the cylinders (3) by means of which fresh gas (6) can be supplied to the respective combustion chamber (4),
- wherein a valve arrangement (11) at the intake end is provided for controlling the fresh gas stream through the gas paths (9, 10) into the respective combustion chamber (4),
- wherein for actuation of the valve arrangement (11), a control unit (13) is provided and is designed so that at partial load it permanently closes the full-load path (9) through appropriate control of the valve arrangement (11) and it controls the fresh gas stream through the partial-load path (10) and at full load it controls the fresh gas stream through the full-load path (9) at least through appropriate control of the valve arrangement (11),
- the valve arrangement (11) for the respective cylinder (3) has two intake valves, namely one partial-load intake valve (14) allocated only to the partial-load path (10) ad one full-load intake valve (15) allocated only to the full-load path (9),
- the control unit (13) is designed so that in partial load the full-load intake valve (15) is actuated for permanently closing the full-load path (9), and the partial-load intake valve (14) is actuated for controlling the fresh gas stream through the partial-load path (10) and a full-load at least the full-load intake valve (15) is actuated to control the fresh gas stream through the full-load path (9).

2. The piston engine according to claim 1,
**characterized in that**
the full-load path (9) has a larger cross section through which the flow can pass than does the partial-load path (10).

3. The piston engine according to claim 1 or 2,
**characterized in that**
the fresh gas system (5) is designed to be throttle-free.

4. The piston engine according to any one of Claims 1 through 3,
**characterized in that**
the control unit (13) is designed so that it controls the respective additional valve (21, 24) exclusively to switch between a blocked position and an open position for controlling the fresh gas stream through the respective gas path (9, 10).

5. The piston engine according to claim 4,
**characterized in that**
the control unit (13) is designed so that it controls the valve arrangement (11) at full load so that a portion of the fresh gas (6) supplied to the respective combustion chamber (4) is supplied via the partial-load path (10).

6. The piston engine according to claim 5,
**characterized in that**
the control unit (13) is designed so that at full load it actuates at least the full-load extra valve (24) to permanently open the full-load path (9) and controls the fresh gas stream through at least one of the gas paths (9, 10) by the opening and closing of the intake valve(s) (14, 15, 17) .

7. The piston engine according to any one of Claims 1 through 6,
**characterized in that**
the partial-load extra valve (21) is designed so that shorter switching times can be implemented with it than with the full-load extra valve (24) and/or

8. The piston engine according to any one of Claims 1 through 7,
**characterized in that**
the partial-load extra valve (21) is designed so that shorter switching times can be implemented with it than with the intake valve(s) (14, 15, 17).

9. The piston engine according to any one of Claims 1 through 8,
**characterized in that**
the control unit (13) is designed so that it implements three intake phases for the fresh gas stream spaced a distance apart from one another in time by actuation of the partial-load extra valve (21) when the partial-load intake valve (14) is opened.

10. The piston engine according to any one of Claims 1 through 9,
**characterized in that**
the control unit (13) is designed so that at full load, the full-load extra valve (24) and the full-load intake valve (15) are controlled only for implementing a pulsed charging.

11. The piston engine according to any one of Claims 1 through 10,
**characterized in that**
the control unit (13) controls the at least one shared intake valve (17) by means of a camshaft (20).

12. The piston engine according to any one of Claims 1 through 10,
**characterized in that**
the control unit (13) controls the partial-load intake valve (14) by means of a camshaft (20).

13. The piston engine according to any one of Claims 1 through 10,
**characterized in that**
the control unit (13) controls the partial-load intake valve (14) and the full-load intake valve (15) by means of at least one camshaft (20).

## Revendications

1. Moteur à pistons, notamment dans un véhicule automobile,
- comportant plusieurs cylindres (3), dont les chambres de combustion (4) sont raccordées à une installation de gaz frais (5),
- dans lequel l'installation de gaz frais (5) présente pour au moins un des cylindres (3) deux trajets de gaz, à savoir un trajet à charge pleine (9) et un trajet à charge partielle (10), par l'intermédiaire desquels la chambre de combustion respective (4) peut être alimentée en gaz frais,
- dans lequel un ensemble de soupapes (1) du côté d'admission est prévu pour commander la courant de gaz frais à travers les trajets de gaz (9,10) dans la chambre de combustion (4) respective,
- dans lequel pour actionner l'ensemble de soupapes (11) un dispositif de commande (13) est prévu, qui est conçu de telle sorte qu'il bloque de manière permanente en présence d'une charge partielle le trajet à charge pleine (19) en pilotant de manière correspondante l'ensemble de soupapes (11) et commande le courant de gaz frais à travers le trajet à charge partielle (10) et en ce que il commande en présence d'une charge plaine le courant de gaz frais au moins par l'intermédiaire du trajet à charge pleine (9) en pilotant de manière correspondante l'ensemble de soupapes (11),
**caractérisé en ce que**
- l'ensemble de soupapes (11) présente pour le cylindre respectif (3) deux soupapes d'admission, à savoir une soupape d'admission à charge partielle (14) affectée seulement au trajet à charge partielle (10)et une soupape d'admission à charge pleine (15) affectée seulement au trajet à charge pleine (9),
- **en ce que** le dispositif de commande (13) est conçu de telle sorte qu'il actionne en présence d'une charge partielle la soupape d'admission à charge pleine (15) pour bloquer de manière permanente le trajet à charge pleine (9) et actionne la soupape d'admission à charge partielle (14) pour commander le courant de gaz frais à travers le trajet à charge partielle (10) et **en ce que** il actionne en présence d'une charge pleine au moins la soupape d'admission de charge pleine (15) pour commander le courant de gaz frais à travers le trajet à charge pleine (9).

2. Moteur à pistons selon la revendication 1,
**caractérisé en ce que**
le trajet à charge pleine (9) présente une plus grande section transversale pouvant être traversée par un flux que le trajet à charge partielle (10).

3. Moteur à pistons selon la revendication 1 ou 2,
**caractérisé en ce que**
l'installation de gaz frais (5) est conçue sans étranglement.

4. Moteur à pistons selon une des revendications 1 à 3,
**caractérisé en ce que**
le dispositif de commande (13) est réalisé de telle sorte qu'il pilote pour commander le courant de gaz frais à travers le trajet de gaz (9,10) respectif la soupape auxiliaire respective (21,24) exclusivement pour commuter entre une position de blocage et une position d'ouverture.

5. Moteur à pistons selon une des revendications 1 à 4,
**caractérisé en ce que**
le dispositif de commande (13) est réalisé de telle sorte que il pilote en présence d'une charge pleine l'ensemble de soupapes (11) de telle sorte que une partie du gaz frais (6) alimenté dans la chambre de combustion respective (4) soit alimentée via le trajet à charge partielle (10).

6. Moteur à pistons selon une des revendications 1 à 5,
**caractérisé en ce que**
le dispositif de commande (13) est réalisé de telle sorte qu'il actionne en présence d'une charge pleine au moins la soupape auxiliaire à charge pleine (24) pour ouvrir de manière permanente le trajet à charge pleine (9) et commande le courant de gaz frais à travers au moins un des trajets de gaz (9,10) en ouvrant et bloquant la ou les soupapes d'admission (14,15,17).

7. Moteur à pistons selon une des revendications 1 à 6,
**caractérisé en ce que**
la soupape auxiliaire à charge partielle (21) est réalisée de telle sorte qu'ainsi des temps de commutation plus qu'avec la soupape auxiliaire à charge pleine (24) puissent être obtenus.

8. Moteur à pistons selon une des revendications 1 à 7,
**caractérisé en ce que**
la soupape auxiliaire à charge partielle (21) est réalisée de telle sorte qu'ainsi des temps de commutations plus courts qu'avec la ou les soupapes d'admission (14,15,17) puissent être obtenus.

9. Moteur à pistons selon une des revendications 1 à 8, **caractérisé en ce que**
le dispositif de commande (13) est réalisé de telle sorte qu'il réalise en présence d'une charge partielle en actionnant la soupape auxiliaire à charge partielle (21) lorsque la soupape d'admission à charge partielle (14) est ouverte trois phases d'admission espacées temporellement les unes des autres pour le courant de gaz frais.

10. Moteur à pistons selon une des revendications 1 à 9,
**caractérisé en ce que**
le dispositif de commande (13) est réalisé de telle sorte qu'il pilote en présence d'une charge pleine la soupape auxiliaire à charge pleine (24) et la soupape d'admission à charge pleine (15) pour réaliser une charge par impulsions.

11. Moteur à pistons selon une des revendications 1 à 10,
**caractérisé en ce que**
le dispositif de commande (13) pilote au moins une soupape d'admission (17) commune au moyen d'un arbre à cames (20).

12. Moteur à pistons selon une des revendications 1 à 10,
**caractérisé en ce que**
le dispositif de commande (13) pilote la soupape d'admission à charge partielle (14) au moyen d'un arbre à cames (20).

13. Moteur à pistons selon une des revendications 1 à 10,
**caractérisé en ce que**
le dispositif de commande (13) pilote la soupape d'admission à charge partielle (14) et la soupape d'admission à charge pleine (15) au moyen d'au moins un arbre à cames (20).
